# EUROPEAN PATENT APPLICATION

(11) **EP 2 461 544 A1**
(43) Date of publication of application: **06.06.2012**
(21) Application number: 10306345.9
(22) Date of filing: 03.12.2010
(51) Int. Cl.: H04L 29/08

(54) **Method for allowing a host machine to access a service**

(71) Applicant: Gemalto SA, 92190 Meudon (FR)
(72) Inventor: Delsuc, Julien, 13013, MARSEILLE (FR); Chafer, Sylvain, 13720, LA BOUILLADISSE (FR); Castillo, Laurent, AUSTIN, TX 78703 (US)

(57) **Abstract**

The invention is a method for allowing a host machine (HM) to access a service (S1) embedded in a physical secure element (SC) which is connected to a portable device (SB). The method comprises the steps of:
- establishing an HTTP session between the host machine and the portable device by using a profile data (PR1) stored into the portable device,
- providing the host machine with an access to the service via a web server (EWS) embedded in the portable device.

## Description

### (Field of the invention)

The present invention relates to the methods of allowing a host machine to access a service. It relates particularly to methods of allowing a host machine to access a service provided by a secure element. In particular, such secure elements may be smart cards.

### (Prior art)

Secure elements (also named secure tokens) are small machines comprising a memory, a microprocessor and an operating system for computing treatments. Secure elements are intended to connect ― either in contact or contactless mode ― a device which may provides power and a user interface. In general, secure elements comprise a plurality of memories of different types. For example, they may comprise memory of RAM, ROM, EEPROM or Flash type. Secure elements have limited computing resources. For example, smart cards are secure elements.

Secure elements may provide several services like crypto services, SIM features, or any applications which may be embedded in a smart card for example. A specific interface is required for accessing a secure element. For example reader interface is needed for accessing a smart card. Thus for accessing services of a secure element, a host machine needs to contain the corresponding specific interface. Alternatively, the host machine may use an intermediary device having the interface specific to the secure element. In this scheme, the host machine must contain another interface specific to the intermediary device. For example a Personal Computer (PC) must contain the driver of the targeted smart card reader.

Many host machines have neither the interface specific to a secure element nor the interface corresponding to the intermediary device. For a huge number of these host machines, no interface may be installed into the host machine because of security reasons or policy reasons.

There is a need to provide a solution for allowing a host machine to access a service embedded in a secure element without additional interface installation in the host machine.

### (Summary of the Invention)

An object of the invention is to solve the above mentioned technical problem.

The object of the present invention is a portable device comprising a first interface which is capable of communicating with a physical secure element. The portable device comprises a second interface capable of communicating with a host machine through a communication channel. The portable device comprises a profile data which contains data allowing to establish a HTTP-based session. The portable device comprises a first means adapted to establish a HTTP-based session over the channel with the host machine by using the profile data. The portable device comprises a web server comprising a second means capable of accessing a service embedded in the secure element. The web server is able to provide the host machine with an access to the service.

A HTTP-based session may be either a HTTP session or a HTTPS session.

Advantageously, the profile data may be the Personal Area Network Profile (also named PAN), the communication channel may comply with Bluetooth ®, and the secure element may be a smart card.

Alternatively, the communication channel may comply with Wi-Fi ® and the secure element may be a smart card.

In another embodiment, the communication channel may comply with the Universal Serial Bus and the secure element may be a smart card.

Another object of the invention is a method for allowing a host machine to access a service embedded in a physical secure element which is connected to a portable device. The method comprises the steps of:
- establishing a HTTP-based session between the host machine and the portable device by using a profile data stored into the portable device,
- providing the host machine with an access to the service via a web server embedded in the portable device.

Advantageously, the method may comprise the step of accessing the service from an application embedded in the host machine.

In one embodiment, the host machine may comprise a web browser and the method may comprise the steps of:
- loading an application in the web browser either from the portable device or from a remote machine,
- accessing the service from the application, said application being run in the web browser.

In one embodiment, the method may comprise the step of accessing the service from an application running on a remote machine via the host machine.

Advantageously, the profile data may be the Personal Area Network Profile, the HTTP-based session may be established over a Bluetooth ® channel (CH1) and the secure element may be a smart card.

Alternatively, the HTTP-based session may be established over a Wi-Fi ® channel and the secure element may be a smart card.

In another embodiment, the HTTP-based session may be established over a Universal Serial Bus (USB) channel and the secure element may be a smart card.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising a host machine, a device and a secure element according to the invention; and
- Figure 2 depicts schematically another example of a system comprising a remote machine, a host machine, a device and a secure element according to the invention.

### (Detailed description of the preferred embodiments)

The invention may apply to any types of secure element which embed one or several services intended to be used by at least one machine.

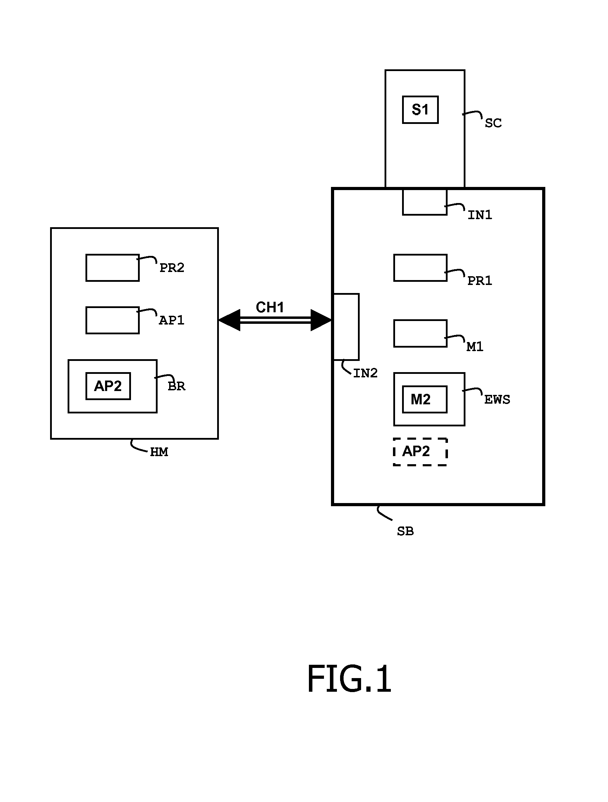

**Figure 1** shows an example of a system comprising a host machine HM, a device SB and a secure element SC.
In the example of Figure 1, the secure element SC is a smart card which comprises a service S1. For example, the service S1 may be a banking application that manages an electronic purse. Although not drawn at Figure 1, the secure element SC comprises a CPU, a working memory, a non volatile memory and an interface able to communicate with the device SB.

If the secure element SC is a smart card compliant with Javacard requirements, the service may be an applet.

The device SB is a portable electronic device comprising smart card reader features. The device SB comprises an interface IN1 able to communicate with the secure element SC. The device SB comprises an interface IN2 able to communicate with a host machine through a communication channel. In particular, the interface IN2 is capable of communicating with the host machine HM. For example, the interface IN2 may be able to manage Bluetooth ® communications. The device SB comprises a profile data PR1 containing data allowing establishing a HTTP (HyperText Transfer Protocol) session over a communication channel. For instance, the profile data PR1 is a Personal Area Network Profile (also named PAN) as defined in Bluetooth standard. The device SB comprises a means M1 able to establish an HTTP over the Bluetooth channel CH1 with the host machine HM by using the profile data PR1. The device SB comprises a web server EWS. The web server EWS comprises a means M2 capable of accessing the service S1 which is embedded in the secure element SC. The web server EWS is capable of providing the host machine HM with an access to the service S1. For instance, the means M2 may be a servlet designed for exchanging data with the secure element SC through the interface IN1.

In one embodiment, the means M1 of the device SB may be comprised in the interface IN2.

In the example of Figure 1, the host machine HM is a mobile phone comprising a web-browser BR, an application AP1 and a profile data PR2. The profile data PR2 is a Bluetooth PAN. The application AP1 may be a banking application developed in HTML (HyperText Markup Language) and JavaScript. The host machine HM is assumed to have a means able to establish a communication channel by using the profile data PR2.

Alternatively, the application AP1 may be developed in any language compliant with the operating system deployed into the host machine HM.

In one embodiment, the application AP1 is assumed to be already installed on the host machine HM.

In the example of Figure 1, the device SB may advantageously comprise an application AP2 (drawn in dotted line) which is intended to be loaded in the web browser BR of the host machine. Alternatively, the application AP2 may be stored into the secure element SC and loaded into the host machine HM from the secure element SC through the device SB.

According to a first embodiment of the method of the invention, a HTTP session is established between the host machine HM and the device SB through a communication channel CH1. The communication channel CH1 may be a wireless channel like Bluetooth ®, Wi-Fi or Bearer Independent protocol (also called BIP). The communication channel CH1 may be a channel using the contact mode like Universal Serial Bus (also called USB).

The HTTP session over the channel CH1 may be initiated either by the device SB or by the host machine HM. In order to have the channel CH1 established on host machine initiative, the device SB must be able to accept a connection request.

Then, in one embodiment, the application AP1 is activated on the host machine. For instance, the final user selects the application AP1 through the graphical user interface (also named GUI) of the host machine HM. Then the application AP1 may send a request to the web server EWS in order the access the service S1. The means M2 of the server EWS may check the presence of the secure element SC and the availability of the targeted service S1 before providing the access to the service S1.

In another embodiment, the application AP2 is loaded from the device SB to the browser BR of the host machine HM. For instance, the final user selects the application AP2 through the graphical user interface (also named GUI) of the host machine HM. This selection may be performed by selecting an URI (Uniform Resource Identifier) corresponding to the application AP2. Then the selected URI is used by the browser BR for getting the application AP2. Then the application AP2 is run by the browser BR. When running on the host machine side, the application AP2 may access the service S1 through the web-server EWS.

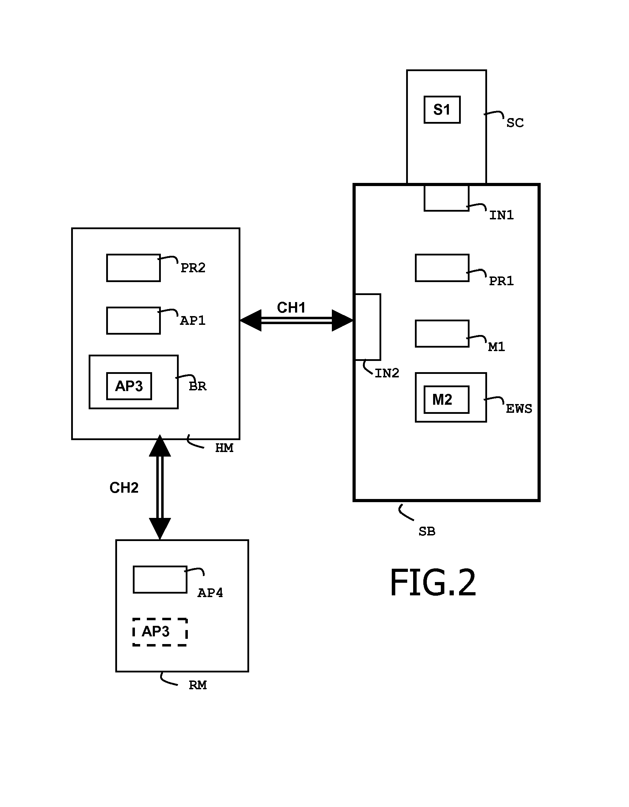

**Figure 2** shows an example of a system comprising a remote machine RM, a host machine HM, a device SB and a secure element SC. The host machine HM, the device SB and the secure element SC are similar to the equipments of the Figure 1.

The remote machine RM is an application server comprising an application AP4 intended to access the service S1 of the secure element SC. The remote machine RM is able to establish a communication session CH2 with the host machine HM. In a preferred example, this communication session CH2 is set up via the Internet. Alternatively, the communication session CH2 may use any relevant network.

In the example of Figure 2, the remote machine RM may advantageously comprise an application AP3 (drawn in dotted line) which is intended to be loaded in the web browser BR of the host machine.

In another embodiment, the application AP3 is loaded from the remote machine RM to the browser BR of the host machine HM. The selection and launching of application AP3 may be carried out in a way similar to the application AP2 management. The access to the web server EWS may be managed according to the well known cross-domain mechanism in the browser BR.

In the case of application AP2 and AP3, applications are loaded when a user selected one of these applications. Then these applications are automatically removed from the browser BR at the end of the use of the application. Thus an advantage of the invention is to let the host machine unchanged at the end of the application execution.

In another embodiment, the application AP4 is launched on the remote machine RM. For instance, a final user selects the application AP4 through the graphical user interface (also named GUI) of the remote machine RM. Then a communication channel CH2 is established between the remote machine RM and the host machine HM. This channel CH2 may be established by using any relevant protocol. The channel CH2 may be established through a public network like Internet, a wireless network or any relevant network. A HTTP session is then established between the host machine HM and the device SB through a communication channel CH1. The host machine is supposed to comprise a routing means which allows forwarding the data between the server EWS and the application AP4. The routing means may be a Network Address Translation (NAT) server or a router. It is reasonable to assume that most existing host machines are equipped with such a routing means.

Advantageously, the device SB may comprise a DHCP (Dynamic Host Configuration Protocol) client in order to automatically manage the IP address of the device SB.

Advantageously, the device SB may comprise a means allowing publishing its name and IP address.

The secure element SC may communicate with the device SB by using an interface in contact mode or wireless mode. The secure element SC may be welded to the device SB. The secure element SC may be a removable element. For example, the secure element SC may be a wireless smart card.

If the channel CH1 is a USB channel, the device SB may use the Ethernet Emulation Mode (EEM) for managing HTTP over USB. In this case the profile data PR1 is the EEM. The USB channel is well-suited for a host machine which has an operating system of Linux type.

If the channel CH1 is a Wi-fi channel, the device SB may use a WEP/WPA key which is stored in the device SB itself or in the secure element SC.

The service S1 of the secure element may be a crypto service. Thus application AP1, AP2, AP3 or AP4 may be able to cipher/sign an e-mail, to manage a payment thanks to a strong authentication, to provide access to another application, to provide access to a distant machine, or to manage access to the host machine itself (e.g. automatic unlocking of the host machine when the device SB comes close to the host machine).

Moreover, application AP1, AP2, AP3 or AP4 are able to access any services embedded in the device SB itself. For example, the device SB may have NFC features and any applications AP1 to AP4 may access these NFC features through the server EWS.

Although all above-described examples use HTTP the invention also cover the embodiment using the secure extension of HTTP which is named HTTPS.

Although only one service is provided by the secure element in all above-described examples, the invention also applies to the access to a plurality of services embedded in the secure element. The invention also applies to the access to a plurality of services embedded in several secure elements connected to a device SB.

In the above-described embodiments, the secure element SC is a smart card. It may be any UICC or a SIM card. The secure element SC may be any physical secure token comprising an operating system, able to communicate with the device SB and providing at least on service.

## Claims

1. A **portable device** (SB) comprising a first interface (IN1) able to communicate with a physical secure element (SC) and a second interface (IN2) able to communicate with a host machine (HM) through a communication channel (CH1),
**characterized in that** the portable device (SB) comprises:
- a profile data (PR1) containing data allowing to establish a HTTP-based session,
- a first means (M1) adapted to establish a HTTP-based session over the channel (CH1) with the host machine (HM) by using said profile data (PR1), and
- a web server (EWS) comprising a second means (M2) able to access a service (S1) embedded in the secure element (SC), said web server (EWS) being able to provide the host machine (HM) with an access to said service (S1).

2. A portable device (SB) according to claim 1, wherein said profile data (PR1) is the Personal Area Network Profile (PAN), wherein the communication channel (CH1) is Bluetooth ® and wherein the secure element (SC) is a smart card.

3. A portable device (SB) according to claim 1, wherein the communication channel (CH1) is Wi-Fi ® and wherein the secure element (SC) is a smart card.

4. A portable device (SB) according to claim 1, wherein the communication channel (CH1) complies with the Universal Serial Bus and wherein the secure element (SC) is a smart card.

5. A **method** for allowing a host machine to access a service (S1) embedded in a physical secure element (SC) which is connected to a portable device (SB), **characterized in that** the method comprises the steps of:
- establishing a HTTP-based session between the host machine (HM) and the portable device (SB) by using a profile data (PR1) stored into the portable device (SB),
- providing the host machine (HM) with an access to the service (S1) via a web server (EWS) embedded in the portable device (SB).

6. A method according to claim 5, wherein said method comprises the step of accessing the service (S1) from an application (AP1) embedded in the host machine (HM).

7. A method according to claim 5, wherein the host machine (HM) comprises a web browser (BR) and wherein said method comprises the steps of:
- loading an application (AP2, AP3) in the web browser (BR) from the portable device (SB) or from a remote machine (RM),
- accessing the service (S1) from the application (AP2, AP3), said application (AP2, AP3) being run in the web browser (BR).

8. A method according to claim 5, wherein said method comprises the step of accessing the service (S1) from an application (AP4) running on a remote machine (RM) via the host machine (HM).

9. A method according to any one of claims 5 to 8, wherein said profile data (PR1) is the Personal Area Network Profile (PAN), wherein the HTTP-based session is established over a Bluetooth ® channel (CH1) and wherein the secure element (SC) is a smart card.

10. A method according to any one of claims 5 to 8, wherein the HTTP-based session is established over a Wi-Fi ® channel (CH1) and wherein the secure element (SC) is a smart card.

11. A method according to any one of claims 5 to 8, wherein the HTTP-based session is established over a Universal Serial Bus channel (CH1) and wherein the secure element (SC) is a smart card.
